# EUROPEAN PATENT APPLICATION

(11) **EP 3 582 288 A1**
(43) Date of publication of application: **18.12.2019**
(21) Application number: 19176328.3
(22) Date of filing: 24.05.2019
(51) Int. Cl.: H01M 2/10

(54) **BATTERY STRUCTURE OF ELECTRIC MOTORCYCLE**

(30) Priority: 15.06.2018 TW 107208055 U
(71) Applicant: Kwang Yang Motor Co., Ltd., Kaohsiung City (TW)
(72) Inventor: LAI, Chien-Hung, Cambridge, CB1 1AH (GB); CHENG, Jen-Chieh, Cambridge, CB1 1AH (GB)
(74) Representative: Horak, Michael

(57) **Abstract**

A battery structure of an electric motorcycle is provided. The battery (2) includes a casing (3) and a top lid (4) and a bottom lid (5) respectively mounted to a top and a bottom of the casing (3). The casing (3) is provided therein with a battery core (9). The top lid (4) and the bottom lid (5) are each provided, in a circumferentially arranged manner, with a coupling flange (44, 54) on one side thereof facing a direction of combination with the casing (3). The coupling flange (44, 54) is provided with a fitting groove (441,541), which receives a sealing ring (7, 8) to embed therein. An outside surface of the sealing ring (7, 8) is in tight engagement with an inside surface of the casing (3), so as to prevent external water and dust from getting into an interior of the battery (2) to improve performance and lifespan of the battery (2).

## Description

### (a) Technical Field of the Invention

The present invention relates generally to a battery structure of an electric motorcycle, and more particularly to a battery structure of an electric motorcycle that prevents invasion of external moisture and dust into an interior of the battery to thereby enhance performance and lifespan of the battery.

### (b) Description of the Prior Art

With the environmental protection concept of carbon reduction gaining increasingly prevailing, electric transportation is now a global movement of the world and an inexorable trend of future. Electric motorcycles are now one of the major business directions of the vehicle industry.

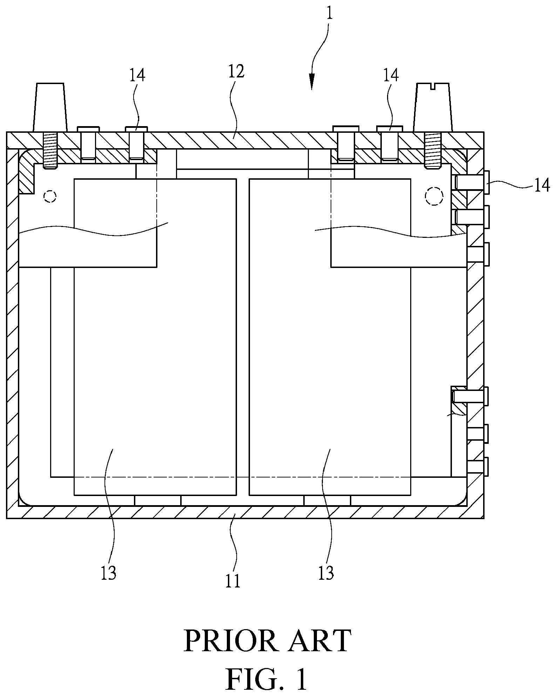

As shown in FIG. 1, a battery 1 that is used to provide a power source to an electric motorcycle generally comprises a casing 11 and a top lid 12 set on a top of the casing 11. The casing 11 receives and holds therein a battery core 13 in order to accumulate and preserve electric energy therein. The top lid 12 and the casing 11 are fixed together by means of threading fasteners 14.

Although fastening and positioning of the top lid 12 and the casing 11 of the known battery 1 achieved with threading fasteners 14 could provide a general effect of water resistance for the battery 1, the battery 1, once used and installed in transportation, such as motorcycles, may suffer frequent thermal expansion and contraction caused by the motorcycle being often subjected to direct exposure to sunlight and rain, and eventually resulting in loss of tightness between the top lid 12 and the casing 11. In addition, transportation, such as motorcycle, may not be well structured to provide well sealed space for holding the battery 1, so that water penetration often occur in the battery 1. Such a situation of water penetration would cause further damage to the battery core 13.

Thus, it is a challenge of electric motorcycle battery manufacturers to provide a battery structure of an electric motorcycle that improves water resistance of a battery to thereby enhance the lifespan of the battery.

### SUMMARY OF THE INVENTION

The primary objective of the present invention is to provide a battery structure of an electric motorcycle, which overcomes the drawbacks of prior art electric motorcycle batteries having poor water resistance and poor dust resistance.

For the above purpose, the technical solution of the present invention that adopted in claim 1 is to provide a battery structure of an electric motorcycle, wherein a battery comprises a casing, a top lid mounted to a top of the casing, and a bottom lid mounted to a bottom of the casing. The casing receives a battery core arranged therein. The top lid is provided, in a circumferentially arranged manner, with a coupling flange on a side thereof facing a direction of combination with the casing and the coupling flange is provided at least one fitting groove, the fitting groove receiving a sealing ring to fit and embed therein, so that an outside surface of the sealing ring is in tight engagement with an inside surface of the top the casing. The bottom lid is provided, in a circumferentially arranged manner, with a coupling flange on one side thereof facing a direction of combination with the casing and the coupling flange is provided with at least one fitting groove, the fitting groove receiving a sealing ring to fit and embed therein, so that an outside surface of the sealing ring is in tight engagement with an inside surface of the bottom of the casing.

For the above purpose, the technical solution of the present invention that adopted in claim 2 is to provide a battery structure of an electric motorcycle, wherein the coupling flange of the top lid is provided with at least one recessed trough at a location close to the fitting groove, and the recessed trough receives an adhesive agent to fill therein.

For the above purpose, the technical solution of the present invention that adopted in claim 3 is to provide a battery structure of an electric motorcycle, wherein the coupling flange of the bottom lid is provided with at least one recessed trough at a location close to the fitting groove, and the recessed trough receives an adhesive agent to fill therein.

For the above purpose, the technical solution of the present invention that is adopted in claim 4 is to provide a battery structure of an electric motorcycle, wherein the recessed trough comprises two troughs.

For the above purpose, the technical solution of the present invention that is adopted in claim 5 is to provide a battery structure of an electric motorcycle, wherein the top lid is provided with a mounting hole extending to the casing, and the mounting hole receives a one-way ventilation valve to mount therein.

For the above purpose, the technical solution of the present invention that is adopted in claim 6 is to provide a battery structure of an electric motorcycle, wherein the battery core is provided with at least one fixing peg, and the top lid is formed with a fixing hole corresponding to the fixing peg, a threading fastener being received through the fixing hole to fix the top lid to the fixing peg.

For the above purpose, the technical solution of the present invention that is adopted in claim 7 is to provide a battery structure of an electric motorcycle, wherein the top lid is provided with a carrying handle and the carrying handle is formed with a through hole corresponding to the fixing hole of the top lid, a threading fastener being received through the through hole and the fixing hole to fix the carrying handle and the top lid together to the fixing peg.

For the above purpose, the technical solution of the present invention that is adopted in claim 8 is to provide a battery structure of an electric motorcycle, wherein the battery core is provided with at least one fixing peg and the bottom lid is formed with a fixing hole corresponding to the fixing peg, a threading fastener being received through the fixing hole to fix the bottom lid to the fixing peg.

For the above purpose, the technical solution of the present invention that is adopted in claim 9 is to provide a battery structure of an electric motorcycle, wherein the one-way ventilation valve comprises two that respectively arranged at two side portions of the top lid.

For the above purpose, the technical solution of the present invention that is adopted in claim 10 is to provide a battery structure of an electric motorcycle, wherein the casing is integrally formed with the battery core to form a unitary one-piece structure.

The efficacy that the primary technical solution of the present invention adopted in claim 1 may achieve is that external moisture and dust are prevented from getting into an interior of a battery so that performance and lifespan of the battery can be enhanced.

The efficacy that the primary technical solution of the present invention adopted in claim 2 may achieve is that water resistance of a battery can be improved.

The efficacy that the primary technical solution of the present invention adopted in claim 3 may achieve is that water resistance of a battery can be improved.

The efficacy that the primary technical solution of the present invention adopted in claim 4 may achieve is that water resistance of a battery can be improved.

The efficacy that the primary technical solution of the present invention adopted in claim 5 may achieve is that excessive accumulation of high temperature gas inside a battery that might affect lifespan of the battery can be prevented.

The efficacy that the primary technical solution of the present invention adopted in claim 6 may achieve is that combination of a top lid with a casing is made easy.

The efficacy that the primary technical solution of the present invention adopted in claim 7 may achieve is that combination of a carrying handle and a top lid with a casing is made easy.

The efficacy that the primary technical solution of the present invention adopted in claim 8 may achieve is that combination of a bottom lid with a casing is made easy.

The efficacy that the primary technical solution of the present invention adopted in claim 9 may achieve is that excessive accumulation of high temperature gas inside a battery that might affect lifespan of the battery can be prevented.

The efficacy that the primary technical solution of the present invention adopted in claim 10 may achieve is that combination of a casing and a battyer core is made easy.

### BRIEF DESCRIPTION OF THE DRAWINGS

FIG. 1 is a schematic view showing a known electric motorcycle battery.
FIG. 2 is an exploded view of a battery of an electric motorcycle according to the present invention.
FIG. 3 is a perspective view showing the battery of the present invention.
FIG. 4 is a cross-sectional view showing the battery of the present invention.
FIG. 5 is a cross-sectional view, in an enlarged form, showing partly a top lid and a casing of the battery of the present invention combined with each other.
FIG. 6 is a cross-sectional view, in an enlarged form, showing partly a bottom lid and the casing of the battery of the present invention combined with each other.

### DETAILED DESCRIPTION OF THE PREFERRED EMBODIMENTS

For better understanding of the structure of the present invention, and the efficacy that can be achieved thereby, a detailed description will be given below with reference to the attached drawings.

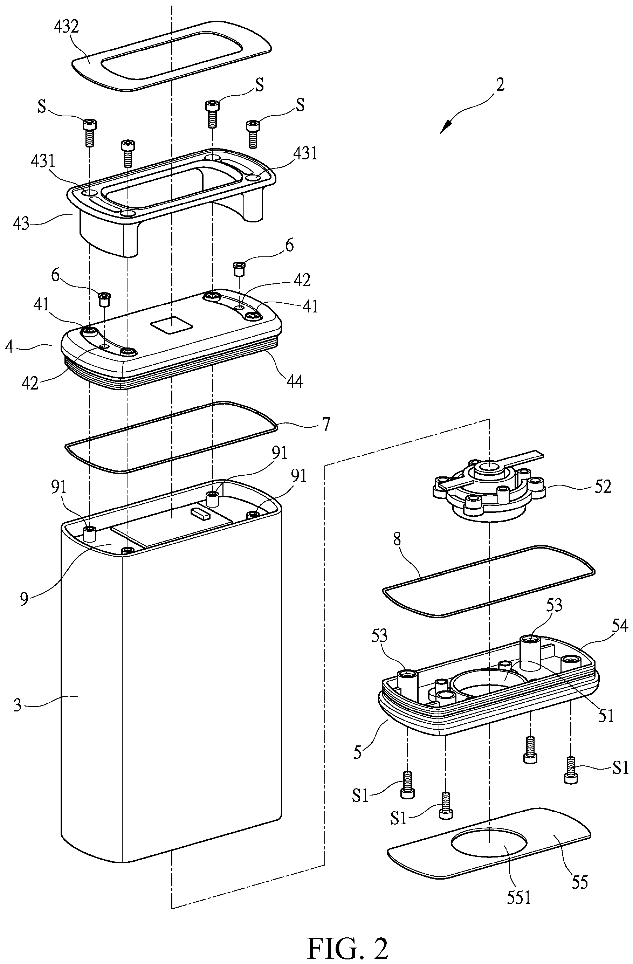

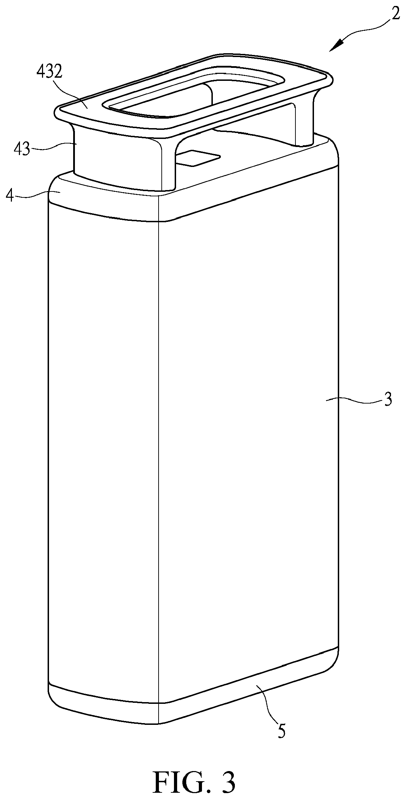

Firstly, referring to FIGS. 2 and 3, the present invention provides a battery structure of an electric motorcycle. The battery 2 comprises a casing 3, a top lid 4 mounted on a top of the casing 3, and a bottom lid 5 mounted on a bottom of the casing 3.

As shown in FIGS. 2, 3, and 4, the casing 3 is made in the form of a rectangular barrel. The casing 3 is provided therein with a battery core 9. The battery core 9 accumulates and stores electric energy therein. The battery core 9 has a top end and a bottom end that are provided with at least one fixing peg 91. The bottom end of the battery core 9 is provided with a power input/output terminal 92. In a practical example, the casing 3 and the battery core 9 are integrally formed together to provide a unitary single-piece element.

As shown in FIGS. 2, 3, 4, and 5, the top lid 4 is mounted to the top of the casing 3 so as to close and seal the top of the casing 3. The top lid 4 is provided with a fixing hole 41 that corresponds to 4 the fixing peg 91 of the battery core 9 and at least one mounting hole 42. In an embodiment of the present invention, two opposite side portions (the left-hand side and the right-hand side as viewed in the drawings) of the top lid 4 are each provided with one mounting hole 42. The fixing holes 41 and the mounting holes 42 extend completely through the top lid 4 and are in communication with the casing 3. The mounting hole 42 may receive a one-way ventilation valve 6 to mount therein so that high temperature gas generated during the operation of the battery core 9 located inside the casing 3 can be discharged and drained through the one-way ventilation valve 6 to protect the lifespan of the battery core 9 from being affected by excessive high temperature gas accumulated in the interior of the battery 2. The top lid 4 is provided on a top side thereof with a carrying handle 43. The carrying handle 43 is formed with a through hole 431 corresponding to the fixing hole 41 of the top lid 4, so that a threading fastener S may be received through the through hole 431 and the fixing hole 41 to screw into the fixing peg 91 of the battery core 9 to thereby collectively fix the carrying handle 43 and the top lid 4 to the fixing peg 91 of the battery core 9. In this way, the top lid 4 is fixed to and positioned on the top of the casing 3. The carrying handle 43 has a top that is provided with a top decoration cover 432. The top decoration cover 432 covers and decorates the top of the carrying handle 43. The top lid 4 is provided with a coupling flange 44 that is circumferentially arranged at the side of the top lid that is opposite to the carrying handle 43, and is oriented in a direction for combining with the casing 3. The coupling flange 44 has an outer diameter that corresponds to an inside diameter of a top opening of the casing 3, so that the coupling flange 44 is insertable into an interior of the top of the casing 3. The coupling flange 44 is provided with at least a fitting groove 441, and the fitting groove 441 receives a sealing ring 7 to fit therein and position therein, so that when the top lid 4 is mounted to the top side of the fixing peg 91 of the battery core 9, the coupling flange 44 is received in the interior of the top of the casing 3 and an external surface of the sealing ring 7 fit into and received in the coupling flange 44 is set in a tight engagement with an inside surface of the top of the casing 3 to provide an enhanced effect of water resistance and dust resistance at interfacing between the casing 3 and the top lid 4.

As shown in FIGS. 2, 3, 4, and 6, the bottom lid 5 is mounted to the bottom of the casing 3 so as to close and seal the bottom of the casing 3. The bottom lid 5 is provided with an installation hole 51 at a location close to a center thereof. The installation hole 51 is provided for receiving a power input/output device 52 to mount therein. The power input/output device 52 is electrically connectable with the power input/output terminal 92 of the battery core 9, so that electric energy that is external of the power input/output device 52 can be supplied into the battery core 9 for storage therein, and alternatively, electric energy stored in the battery core 9 can be fed out for use by the electric motorcycle. The bottom lid 5 is provided with a fixing hole 53 that corresponds to a fixing peg 91 on the bottom side of the battery core 9, so that a threading fastener S1 may be received through the fixing hole 53 to fix the bottom lid 5 to the fixing peg 91 of the battery core 9. In this way, the bottom lid 5 is securely fixed to the bottom of the casing 3. The bottom lid 5 is provided with a coupling flange 44 that is circumferentially arranged and is oriented in direction for combining with the casing 3. The coupling flange 54 has an outer diameter that corresponds to an inside diameter of a bottom opening of the casing 3, so that the coupling flange 54 is insertable into an interior of the bottom of the casing 3. The coupling flange 54 is provided with at least a fitting groove 541, and the fitting groove 541 receiving a sealing ring 8 to fit therein and position therein, so that when the bottom lid 5 is mounted to the bottom side of the fixing peg 91 of the battery core 9, the coupling flange 54 is received in the interior of the bottom of the casing 3 and an external surface of the sealing ring 8 fit into and received in the coupling flange 54 is set in a tight engagement with an inside surface of the bottom of the casing 3 to provide an enhanced effect of water resistance and dust resistance at interfacing between the casing 3 and the bottom lid 5. The bottom lid 5 is provided, on an outside surface, which is the side that is distant from the casing 3, with a bottom decoration cover 55. The bottom decoration cover 55 is provided with a penetration hole 551 corresponding to the installation hole 51 of the bottom lid 5. The penetration hole 551 allows a portion of the power input/output device 52 to extend outward therethrough.

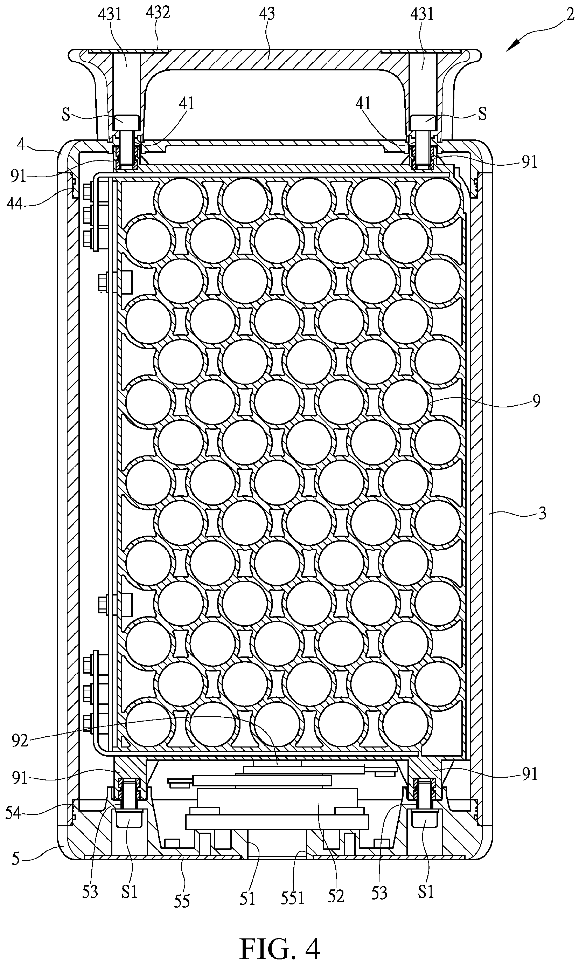

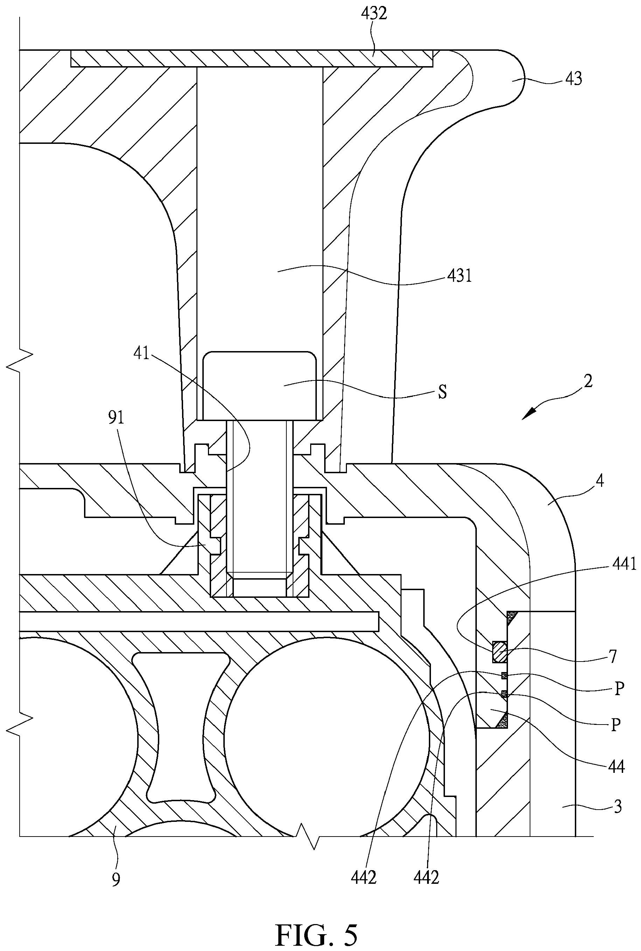

As shown in FIGS. 4 and 5, the coupling flange 44 of the top lid 4 is further provided with at least one recessed trough 442 at a location close to the fitting groove 441. This invention is embodied as comprising two recessed troughs 442. The recessed troughs 442 receive an adhesive agent P to fill therein so as to improve and achieve a bettered effect of water resistance and dust resistance at the interfacing between the casing 3 and the top lid 4.

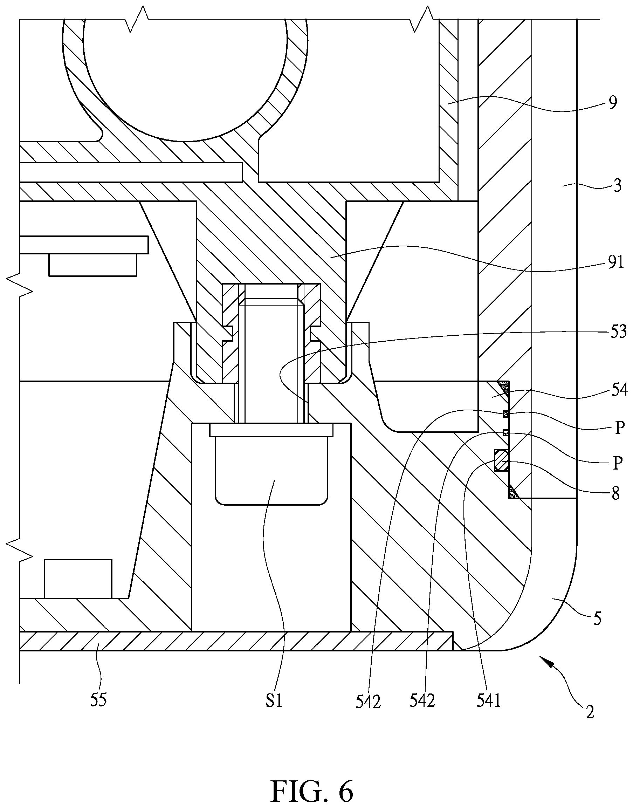

As shown in FIGS. 4 and 6, the coupling flange 54 of the bottom lid 5 is further provided with at least one recessed trough 542 at a location close to the fitting groove 541. This invention is embodied as comprising two recessed troughs 542. The recessed troughs 542 receive an adhesive agent P to fill therein so as to improve and achieve a bettered effect of water resistance and dust resistance at the interfacing between the casing 3 and the top lid 4.

The primary efficacy of the present invention is that a battery 2 is structured to comprise a casing 3, a top lid 4 mounted on a top of the casing 3, and a bottom lid 5 mounted on a bottom of the casing 3 and the casing 3 is provided therein with a battery core 9. The top lid 4 is provided, in a circumferentially arranged manner, with a coupling flange 44 on a side thereof facing a direction of combination with the casing 3. The coupling flange 44 is provided with at least a fitting groove 441, and the fitting groove 441 receives a sealing ring 7 to fit and embed therein, so that an outside surface of the sealing ring 7 is set in tight engagement with an inside surface of the top of the casing 3. The bottom lid 5 is provided, in a circumferentially arranged manner, with a coupling flange 54 on one side thereof facing a direction of combination with the casing 3. The coupling flange 54 is provided with at least a fitting groove 541, and the fitting groove 541 receives a sealing ring 8 to fit and embed therein, so that an outside surface of the sealing ring 8 is set in tight engagement with an inside surface of the bottom of the casing 3. Thus, a bettered effect of water resistance and dust resistance is achieved at interfacings between the casing 3 and the top lid 4 and between the casing 3 and the bottom lid 5 to prevent external water and dust from getting into an interior of the battery 2 so as to improve the performance and lifespan of the battery 2.

A second efficacy of the present invention is that a coupling flange 44 of a top lid 4 is provided with at least one recessed trough 442 at a location close to a fitting groove 441 and the recessed trough 442 receives an adhesive agent P to fill therein so as to further improve water resistance of the battery 2.

A third efficacy of the present invention is that a coupling flange 54 of a bottom lid 5 is provided with at least one recessed trough 542 at a location close to a fitting groove 541 and the recessed trough 542 receives an adhesive agent P to fill therein so as to further improve water resistance of the battery 2.

A fourth efficacy of the present invention is that each of recessed trough 442, 542 is provided as two such troughs so as to further improve water resistance of the battery 2.

A fifth efficacy of the present invention is that a top lid 4 is provided with a mounting hole 42 extending into the casing 3 and the mounting hole 42 receives a one-way ventilation valve 6 to mount therein so as to prevent excessive accumulation of high temperature in an interior of a battery 2 that affects a lifespan of a battery core 9.

A sixth efficacy of the present invention is that a battery core 9 is provided with at least one fixing peg 91 and a top lid 4 is provided with a fixing hole 41 corresponding to the fixing peg 91, wherein a threading fastener S is received through the fixing hole 41 to fix the top lid 4 to the fixing peg 91 so as to ease combination of the top lid 4 with a casing 3.

A seventh efficacy of the present invention is that a top lid 4 is provided, on a top thereof, with a carrying handle 43, and the carrying handle 43 is provided with a through hole 431 corresponding to a fixing hole 41 of the top lid 4, wherein a threading fastener S is received through the through hole 431 and the fixing hole 41 to fix the carrying handle 43 and the top lid 4 collectively to a fixing peg 91, so as to ease combination of the carrying handle 43 and the top lid 4 with a casing 3.

An eighth efficacy of the present invention is that a battery core 9 is provided with at least one fixing peg 91 and a bottom lid 5 is provided with a fixing hole 53 corresponding to the fixing peg 91, wherein a threading fastener S1 is received through the fixing hole 53 to fix the bottom lid 5 to the fixing peg 91 so as to ease combination of the bottom lid 5 with a casing 3.

A ninth efficacy of the present invention is that a one-way ventilation valve 6 is provided as two such valves that are respectively at two side portions of a top lid 4 so as to prevent excessive accumulation of high temperature in an interior of a battery 2 that affects a lifespan of a battery core 9.

A tenth efficacy of the present invention is that a casing 3 is integrally formed with a battery core 9 to form a unitary single-piece structure so as to ease combination of the casing 3 and the battery core 9.

## Claims

1. A battery structure of an electric motorcycle, wherein a battery (2) comprises a casing (3), a top lid (4) mounted to a top of the casing (3), and a bottom lid (5) mounted to a bottom of the casing (3), the casing (3) receiving a battery core (9) arranged therein, **characterized in that** the top lid (4) is provided, in a circumferentially arranged manner, with a coupling flange (44) on a side thereof facing a direction of combination with the casing (3), the coupling flange (44) being provided at least one fitting groove (441), the fitting groove (441) receiving a sealing ring (7) to fit and embed therein, so that an outside surface of the sealing ring (7) is in tight engagement with an inside surface of the top the casing (3); the bottom lid (5) is provided, in a circumferentially arranged manner, with a coupling flange (54) on one side thereof facing a direction of combination with the casing (3), the coupling flange (54) being provided with at least one fitting groove (541), the fitting groove (541) receiving a sealing ring (8) to fit and embed therein, so that an outside surface of the sealing ring (8) is in tight engagement with an inside surface of the bottom of the casing (3).

2. The battery structure of the electric motorcycle according to claim 1, wherein the coupling flange (44) of the top lid (4) is provided with at least one recessed trough (442) at a location close to the fitting groove (441), the recessed trough (442) receiving an adhesive agent (P) to fill therein.

3. The battery structure of the electric motorcycle according to claim 1, wherein the coupling flange (54) of the bottom lid (5) is provided with at least one recessed trough (542) at a location close to the fitting groove (541), the recessed trough (542) receiving an adhesive agent (P) to fill therein.

4. The battery structure of the electric motorcycle according to claim 1, wherein the recessed trough (442, 542) comprises two troughs.

5. The battery structure of the electric motorcycle according to claim 1, wherein the top lid (4) is provided with a mounting hole (42) extending to the casing (3), the mounting hole (42) receiving a one-way ventilation valve (6) to mount therein.

6. The battery structure of the electric motorcycle according to claim 1, wherein the battery core (9) is provided with at least one fixing peg (91), the top lid (4) being formed with a fixing hole (41) corresponding to the fixing peg (91), a threading fastener (S) being received through the fixing hole (41) to fix the top lid (4) to the fixing peg (91).

7. The battery structure of the electric motorcycle according to claim 6, wherein the top lid (4) is provided with a carrying handle (43), the carrying handle (43) being formed with a through hole (431) corresponding to the fixing hole (41) of the top lid (4), a threading fastener (S) being received through the through hole (431) and the fixing hole (41) to fix the carrying handle (43) and the top lid (4) together to the fixing peg (91).

8. The battery structure of the electric motorcycle according to claim 1, wherein the battery core (9) is provided with at least one fixing peg (91), the bottom lid (5) being formed with a fixing hole (53) corresponding to the fixing peg (91), a threading fastener (S) being received through the fixing hole (53) to fix the bottom lid (5) to the fixing peg (91).

9. The battery structure of the electric motorcycle according to claim 5, wherein the one-way ventilation valve (6) comprises two that respectively arranged at two side portions of the top lid (4).

10. The battery structure of the electric motorcycle according to claim 1, wherein the casing (3) is integrally formed with the battery core (9) to form a unitary one-piece structure.
